# EUROPÄISCHE PATENTSCHRIFT

(11) **EP 1 065 127 B1**
(45) Veröffentlichungstag und Bekanntmachung des Hinweises auf die Patenterteilung: **10.11.2004**
(21) Anmeldenummer: 00113458.4
(22) Anmeldetag: 24.06.2000
(51) Int. Cl.: B61L 15/00, H04L 12/46, H04L 12/28

(54) **Einrichtung zur Konvertierung von Kommunikationsprotokollen zwischen einem Fahrzeugbus und einem Zugbus in einem Zugkommunikationssystem**
Communication protocols converting system between a vehicle bus and a train bus in a train communication system
Système de conversion de protocole de communication entre un bus de véhicule et un bus de train dans un système de communication en train

(30) Priorität: 28.06.1999 DE 19929608
(43) Veröffentlichungstag der Anmeldung: 03.01.2001
(73) Patentinhaber: Railion Deutschland AG, 55116 Mainz (DE)
(72) Erfinder: Gralla, Dietmar, Dr., 32425 Minden (Westf.) (DE); Witte, Stefan, Dr., 32425 Minden (Westf.) (DE); Heinz, Sebastian, 32423 Minden (Westf.) (DE)
(74) Vertreter: Zinken-Sommer, Rainer

(56) Entgegenhaltungen:
- EP-A- 0 300 350
- EP-A- 1 010 601
- EP-A- 1 010 602
- WO-A-95/27357
- WO-A-98/43392

## Beschreibung

Die Erfindung betrifft ein Datenkommunikationssystem im Zug, mit einem Zugbus zur Kommunikation zwischen Fahrzeugen des Zuges und jedem Fahrzeug zugeordneten internen Fahrzeugbussystemen, die über jeweils ein Gateway an den Zugbus angekoppelt sind, mit den im Oberbegriff des Anspruchs 1 genannten Merkmalen.

Datenkommunikationssysteme der gattungsgemäßen Art sind bekannt. Bei diesen erfolgt eine Datenkommunikation einerseits über einen Zugbus zwischen den Fahrzeugen des Zuges. Andererseits erfolgt eine Datenkommunikation innerhalb eines Fahrzeuges über einen Fahrzeugbus. Zur Datenkommunikation zwischen Systemkomponenten der Fahrzeuge sind die jeweiligen Fahrzeugbussysteme über Gateways mit dem Zugbus verbunden.

Voraussetzung für eine Datenkommunikation zwischen den einzelnen Fahrzeugen innerhalb des Zuges ist eine Initialisierung des Datenkommunikationssystems. Hierbei werden den einzelnen Gateways (Fahrzeugen) durch eine sogenannte Zugtaufe eindeutige feste Adressierungen zugeordnet. Die Adressierung ist zwingende Voraussetzung für eine fahrzeugindividuelle Datenkommunikation innerhalb des Zuges.

Um diese Initialisierung und ein spätere Steuerung der Datenkommunikation durchführen zu können, ist es erforderlich, einem Fahrzeug des Zuges eine Master-Funktion zuzuordnen. Alle weiteren Kommunikationsteilnehmer erhalten eine Slave-Funktion. Master-Funktionen werden hierbei von Systemkomponenten des Zuges übernommen, die aus Vorgaben eines Triebfahrzeugführers, eines automatischen Steuerungssystems oder dergleichen Befehle für einzelne Subsysteme des Zuges, wie beispielsweise Antrieb, verteilter Antrieb, Bremse oder dergleichen, generieren. Slave-Funktionen werden von den Systemkomponenten des Zuges übernommen, die diese Befehle umsetzen.

Bekannt ist, die Datenkommunikation auf dem Zugbus und in den Fahrzeugbussen mit dem CAN (Controller-Area-Network)-Protokoll durchzuführen. Daten beziehungsweise Informationen werden hierbei zwischen den Kommunikationsteilnehmern als sogenannte Botschaften übertragen. Um eine geordnete Kommunikation sicherzustellen, wird jeder zu übertragenden Botschaft eine Identifizierung zugeordnet. Anhand dieser Identifizierung kann jeder Kommunikationsteilnehmer entscheiden, ob die Botschaft für ihn bestimmt beziehungsweise relevant ist, um sie nur in diesem Falle zu empfangen. Gleichzeitig kann über die Identifizierung eine Prioritätsreihenfolge der Übertragung der Botschaften bestimmt werden.

Bei der Vergabe der Identifizierungen ist wichtig, dass die Identifizierung eindeutig einem Sender der Botschaft zuzuordnen ist, um Kollisionen zu vermeiden, wenn mehrere Sender gleichzeitig Botschaften in die Bussysteme senden. Ferner ist über die Identifizierung möglich, von einem Sender eine Botschaft zu einem bestimmten Empfänger zu senden.

Bei den bekannten Datenkommunikationssystemen im Zug, die eine Kommunikation mittels CAN-Protokollen durchführen, ist nachteilig, dass keine direkte Kommunikation zwischen beliebigen Teilnehmern möglich ist. Soll beispielsweise von einer Systemkomponente eines Slave-Systems eine Botschaft an eine Systemkomponente eines anderen Slave-Systems gesendet werden, ist zunächst die Botschaft an das Master-System zu senden, das die Botschaft liest, erkennt, dass die Botschaft für ein anderes Slave-System bestimmt ist und eine dem entsprechende neue Identifizierung der Botschaft generiert und diese neu sendet. Die durch das Master-System neu zu vergebende Identifizierung basiert auf im Master-System vorliegenden Informationen, die infolge der zuvor erfolgten Initialisierung (Zugtaufe) des Datenkommunikationssystems übergeben wurden. Neben dem durch die mehrmalige Identifizierung einer Botschaft erforderlichen hohen Aufwand ist nachteilig, dass das initialisierte Datenkommunikationssystem nicht offen für die Einbindung weiterer Systemkomponenten des Zuges ist. Werden beispielsweise einem der Fahrzeugbusse weitere Systemkomponenten hinzugefügt, die an der Datenkommunikation teilhaben sollen, müssen sowohl auf den Fahrzeugbussen als auch auf dem Zugbus neue Identifizierungen vergeben werden. Hierzu ist bekannt, dass die über das Datenkommunikationssystem übertragenen Botschaften in den Gateways, mit denen die Fahrzeugbusse an den Zugbus angekoppelt sind, empfangen werden und in neue Botschaften umgesetzt werden. Das heißt, eine über den Zugbus empfangene Botschaft wird im Gateway umgewandelt und dann auf den jeweiligen Fahrzeugbus gesendet. Umgekehrt werden über den Fahrzeugbus an das Gateway gesendete Botschaften ebenfalls umgewandelt und dann auf den Zugbus gesendet. Wird nun dem einen der Fahrzeugbusse eine neue Systemkomponente hinzugefügt, muss in allen Gateways eine entsprechende Softwareänderung vorgenommen werden, die bei der Umwandlung der Botschaften die neuen Systemkomponenten berücksichtigt. Dies ist sehr aufwendig und uneffektiv.

Aus WO 98 43392 ist ein Datenkommunikationssystem in einem Zug bekannt, mit einem Zugbus zur Kommunikation zwischen Fahrzeugen des Zuges und jedem Fahrzeug zugeordneten internen Fahrzeugbussen, die über jeweils ein Gateway ah den Zugbus gekoppelt sind. Hierbei umfasst jede Zugbotschaft gleichzeitig eine Sender- und Empfängercodierung. ,

Der Erfindung liegt die Aufgabe zugrunde, ein Datenkommunikationssystem der gattungsgemäßen Art zu schaffen, mittels dem in einfacher Weise eine Kommunikation zwischen beliebigen Teilnehmern möglich ist.

Erfindungsgemäß wird diese Aufgabe durch ein Datenkommunikationssystem mit den im Anspruch 1 genannten Merkmalen gelöst. Dadurch, dass eine Zugbusbotschaft gleichzeitig eine Sender- und eine Empfängercodierung erhalten kann, wird eine direkte Kommunikation zwischen Systemkomponenten ermöglicht, die an unterschiedlichen Fahrzeugbussen angeschlossen sind. Insbesondere, wenn die Identifizierungen der Botschaften ausschließlich auf den Fahrzeugbussen vergeben werden und über die Gateways eine Umwandlung in eine Zugbusidentifizierung automatisch erfolgt, lassen sich weitere Systemkomponenten an den Fahrzeugbussen anschließen, ohne dass eine Umprogrammierung des gesamten Datenkommunikationssystems zur Gewährleistung eines Informationsaustausches erfolgen muss. Dieses ist vorteilhaft möglich, da eine Identifikationsvergabe ausschließlich auf den beteiligten Fahrzeugbussen erfolgt, und die Umwandlung in die Zugbusidentifizierung nach vorgebbaren Algorithmen automatisch durch die Gateways erfolgt. Diese können somit für jede beliebige neue Botschaft entsprechend dem abgelegten Algorithmus eine Identifizierung derart vergeben, dass jede beliebige Systemkomponente, die an anderen Fahrzeugbussen angeschlossen ist, erreichbar ist.

Insbesondere ist bevorzugt, wenn die Botschaften von den sendenden Systemkomponenten in globale Botschaften, nicht-globale Botschaften und fahrzeugbusinterne Botschaften unterteilbar sind. Hierdurch ist eine wesentliche Vereinfachung der Vergabe der Identifizierungen möglich. Da globale Botschaften von allen angeschlossenen Systemkomponenten empfangen werden sollen, ist eine zusätzliche Empfängeridentifizierung nicht notwendig. Ferner brauchen fahrzeugbusinterne Botschaften nicht einer zusätzlichen Identifizierung unterzogen werden, da diese ebenfalls keiner Sender- und Zielcodierung bedürfen. Nur die nicht-globalen Botschaften, die von einem bestimmten Sender (Systemkomponente eines Fahrzeugbusses) zu einem bestimmten Empfänger (Systemkomponente eines anderen Fahrzeugbusses) gesendet werden müssen, bedürfen einer eindeutigen Sender- und Zielcodierung. Diese von den Gateways der Fahrzeugbussysteme vorgenommene Codierung kann von jedem Gateway der unterschiedlichen Fahrzeugbussysteme mit einer entsprechenden Identifizierungsvergabe erfolgen. Somit können auch jedem Fahrzeugbus unabhängig von einer Stellung (Ordnungsnummer) des Fahrzeugbusses im Zugbus gleiche Identifizierungen vergeben werden. Die Anzahl der Identifizierungen und der zu verwendenden Codierungen und damit die Anzahl der hierfür zur Verfügung zu haltenden Datenbytes innerhalb der Botschaften lässt sich somit reduzieren, so dass die Handhabung der Codierung vereinfacht ist. Gleichzeitig ist der zur Verfügung stehende Speicherplatz für die Daten- beziehungsweise Signalübertragung vergrößert.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnung, die schematisch ein Datenkommunikationssystem eines Zuges zeigt, näher erläutert.

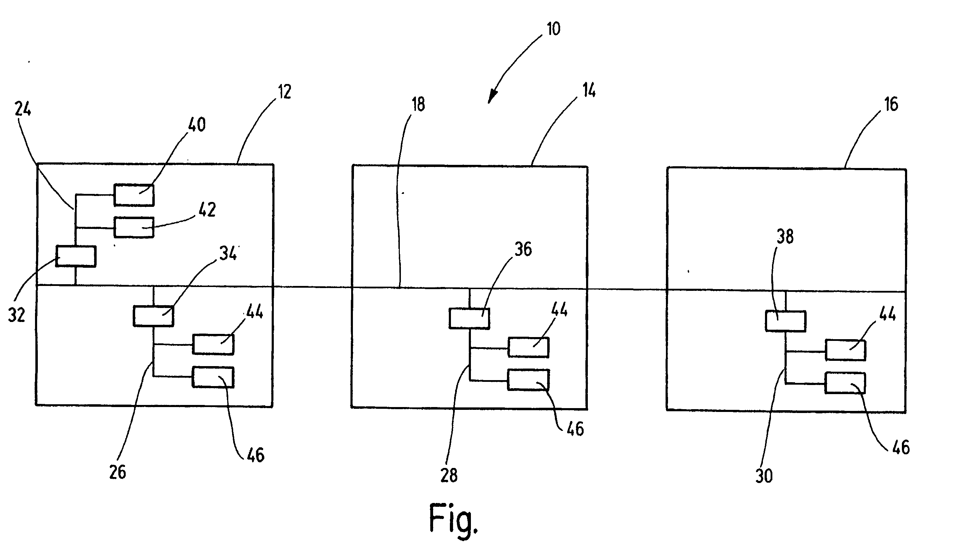

Die Figur zeigt schematisch einen Zug 10. Der Zug 10 umfasst ein Triebfahrzeug 12 und zwei Fahrzeuge (Wagen) 14 und 16. Es ist selbstverständlich, dass die dargestellte Konfiguration des Zuges 10 lediglich beispielhaft ist. So können nach weiteren Ausführungsbeispielen innerhalb des Zuges 10 auch mehr Triebfahrzeuge oder weniger oder mehr Fahrzeuge vorgesehen sein.

Die Fahrzeuge 12, 14 und 16 sind über einen Zugbus 18 miteinander verbunden. Der Zugbus 18 ist ein CAN-Bus. Die Fahrzeuge 12, 14 und 16 besitzen jeweils fahrzeuginterne CAN-Fahrzeugbusse 24, 26, 28 beziehungsweise 30. Der Fahrzeugbus 24 ist über ein Gateway 32, der Fahrzeugbus 26 über ein Gateway 34, der Fahrzeugbus 28 über ein Gateway 36 und der Fahrzeugbus 30 über ein Gateway 38 mit dem Zugbus 18 verbunden.

Der Fahrzeugbus 24 ist ein Master-Fahrzeugbus, über den stellwerterzeugende Systemkomponenten 40 beziehungsweise 42 an den Fahrzeugbus 18 gekoppelt sind. Die Fahrzeugbusse 26, 28 und 30 sind Slave-Fahrzeugbusse, über die stellwertumsetzende Systemkomponenten 44 beziehungsweise 46 an den Zugbus 18 koppelbar sind. Die Systemkomponenten 40 und 42 können aus Vorgaben eines Triebfahrzeugführers, eines automatischen Steuerungssystems oder dergleichen Befehle für einzelne Subsysteme, beispielsweise die Systemkomponenten 44 und 46, geben. Die Systemkomponenten 44 und 46 sind beispielsweise Antriebssysteme, Bremssysteme, Überwachungssysteme oder dergleichen.

Sowohl der Zugbus 18 als auch die Fahrzeugbusse 24, 26, 28 und 30 sind CAN-Busse, das heißt, die Übertragung der Befehle, Signale, Informationen oder dergleichen zwischen den einzelnen Systemkomponenten des Zuges erfolgen mit einem CAN-Protokoll. Dies bedeutet, die Daten werden zu sogenannten Botschaften zusammengefasst, die eine zusammenhängende Folge von Datenbytes - entsprechend den zu übertragenden Informationen oder dergleichen - besitzen. Um eine gezielte Übertragung dieser Botschaften von einem Sender zu einem Empfänger innerhalb des Datenkommunikationssystems des Zuges 10 zu ermöglichen, ist folgendes vorgesehen:

Während der Initialisierung (Zugtaufe) des Kommunikationssystems erhält jedes Gateway und somit jeder Fahrzeugbus eine Ordnungsnummer. Beispielsweise hat das Gateway 32 die Ordnungsnummer Null, das Gateway 34 die Ordnungsnummer Eins, das Gateway 36 die Ordnungsnummer Zwei und das Gateway 38 die Ordnungsnummer Drei. Entsprechend der Anzahl der angeschlossenen Fahrzeugbusse erfolgt eine fortlaufende Vergabe der Ordnungsnummern. Den an den Zugbus 18 angeschlossenen Gateways stehen hiermit die Ordnungsnummern aller Gateways zur Verfügung.

Bei der Datenübertragung können innerhalb der Fahrzeugbusse 24, 26, 28 beziehungsweise 30 generell drei Arten von zu übertragenden Botschaften existieren. Dies sind zum einen sogenannte globale Botschaften, die von einem Sender (einer Systemkomponente) zu allen Empfängern (einer Systemkomponente) gesendet werden. Diese globalen Botschaften sind von einem beliebigen Sender generiert und zum Empfang für sämtliche Systemkomponenten bestimmt. Hierdurch bedürfen die globalen Botschaften keiner Sender- und Zielcodierung. Hierdurch wird möglich, alle zur Informationsübertragung geeigneten Datenbytes dieser Botschaften für die eigentliche Datenübertragung zu verwenden, da eine Codierung nicht notwendig ist.

Ferner sind fahrzeugbusinterne Botschaften möglich, die nicht über den Zugbus 18 zu übertragen sind. Schließlich sind sogenannte nicht-globale Botschaften möglich, die von einem bestimmten Sender, beispielsweise Systemkomponente 46 des Fahrzeugbusses 26, zu einem bestimmten Empfänger, beispielsweise Systemkomponente 44 des Fahrzeugbusses 28, zu übertragen sind. Hier bedarf es einer exakten Sender- beziehungsweise Zielcodierung, um eine eindeutige Übertragung zu ermöglichen.

Zunächst wird für das Datenkommunikationssystem im Zug 10 grundsätzlich die Vergabe der Identifier festgelegt. Hierbei wird von einer möglichen Maximalzahl von an den Zugbus 18 anschließbaren Fahrzeugbussen ausgegangen. Diese Maximalzahl kann beispielsweise "128" betragen. Demnach ist vorgesehen, die Vergabe der Identifier so festzulegen:

| | |
|---|---|
| 0 bis 127 | für globale Botschaften, |
| 128 bis 255 | für nicht-globale Botschaften, |
| 256 bis 383 | für fahrzeugbusinterne Botschaften, |
| 384 bis 511 | für nicht-globale Botschaften, |
| 512 bis 639 | für fahrzeugbusinterne Botschaften |

und so weiter.

Um so niedriger der Identifier für eine Botschaft gewählt ist, um so höher ist die Priorität dieser Botschaft. Um Botschaften innerhalb der erläuterten Arten von Botschaften mit höherer oder niederer Priorität auszustatten, ist wie die obengenannte Tabelle verdeutlicht, eine abwechselnde Anordnung von Blöcken für nicht-globale Botschaften und Blöcken für fahrzeugbusinterne Botschaften bei der Vergabe der Identifier vorgesehen.

Die nicht-globalen Botschaften sind auf den Fahrzeugbussen zu Gruppen, zu sogenannten Botschaftsklassen, zusammengefasst. Diese Botschaftsklassen umfassen alle Botschaften einer bestimmten Art, wie beispielsweise übertragene Sollwerte, übertragene Istwerte, übertragene Diagnosemeldungen und so weiter. Innerhalb einer dieser Botschaftsklassen haben die einzelnen Botschaften aufeinanderfolgende Fahrzeugbusidentifier IDF. Der niedrigste Identifier dieses Bereiches wird als Start-Identifier Fahrzeugbus S-IDF definiert und bestimmt somit die Botschaftsklasse.

Auf dem Zugbus 18 ist den Botschaftsklassen ein Zugbusidentifier IDZ zugeordnet, der aus einem StartIdentifier Zugbus S-IDZ und der vergebenen Ordnungsnummer des botschaftssendenden Fahrzeugbusses (bei der Initialisierung/Zugtaufe vergebende Ordnungsnummer) gebildet ist. Werden unterschiedliche Botschaften einer Botschaftsklasse auf den Zugbus übertragen, erfolgt eine Multiplex-Codierung MUX in einem weiteren Datenbyte der Botschaft.

Durch Zusammenfassung der Botschaften zu den genannten Botschaftsklassen ist eine prioritätsabhängige Übertragung der Botschaften sichergestellt, das heißt, alle Botschaften einer Botschaftsklasse haben eine ähnliche Priorität beispielsweise sind die Botschaften der Botschaftsklasse "Sollwerte" mit einer höheren Priorität angesiedelt als die Botschaften der Botschaftsklasse "Istwerte".

Um die Übertragung der Botschaften über das Datenkommunikationssystem zu ermöglichen, sind in den Gateways 32, 34, 36, 38 Übersetzungsvorschriften abgelegt, die die Botschaften von den Fahrzeugbussen auf den Zugbus weiterleiten. Hierbei gilt, dass der Zugbusidentifier IDZ aus dem Start-Identifier Zugbus S-IDZ und der Ordnungsnummer des sendenden Gateways gebildet ist. Ferner ist der Fahrzeugbusidentifier IDF aus dem Start-Identifier Fahrzeugbus S-IDF und der Multiplex-Codierung MUX gebildet. Für den Start-Identifier Fahrzeugbus S-IDF gilt idealerweise, dass dieser gleich dem Start-Identifier Zugbus S-IDZ entspricht. Nach einer weiteren Möglichkeit kann innerhalb der Gateways eine Tabelle abgelegt sein, die einem bestimmten Start-Identifier Fahrzeugbus einen bestimmten Start-Identifier Zugbus zuordnet.

Dadurch, dass vorteilhafterweise der Start-Identifier Zugbus S-IDZ dem Start-Identifier Fahrzeugbus S-IDF entspricht, ist die Kommunikation übersichtlicher.

Die Übertragung einer konkreten Botschaft, beispielsweise von der Systemkomponente 46 des Fahrzeugbusses 26 zur Systemkomponente 44 des Fahrzeugbusses 28, erfolgt anhand der erläuterten Grundsätze folgendermaßen:

Die Botschaft wird im Identifier mit dem Fahrzeugbusidentifier IDF versehen. Gleichzeitig wird in das erste Datenbyte der Botschaft das Ziel, nämlich die Ordnungsnummer des die Botschaft empfangenden Fahrzeugbusses 28, geschrieben. Das Gateway 34 muss bei der Übertragung zunächst überprüfen, ob diese Botschaft auf den Zugbus 18 gesendet werden kann. Hierzu wird anhand des Fahrzeugbusidentifiers IDF überprüft, ob es sich nicht um eine fahrzeugbusinterne Botschaft handelt. Diese wäre nicht auf den Zugbus 18 zu übertragen. Handelt es sich um eine globale Botschaft, kann diese unverändert auf den Zugbus 18 gesendet werden, so dass sie von allen angeschlossenen Kommunikationsteilnehmern empfangbar ist. Wird anhand des Fahrzeugbusidentifiers IDF festgestellt, dass es sich um eine nicht-globale Botschaft handelt, erfolgt eine Umadressierung. Anhand der im ersten Datenbyte der Botschaft abgelegten Ordnungsnummer des Empfängerfahrzeugbusses erkennt das Gateway 34, dass es sich um eine nicht-globale Botschaft handelt. Bei der Umadressierung wird folgendermaßen vorgegangen:

Zunächst wird aus dem Fahrzeugbusidentifier IDF der Botschaft der Start-Identifier Fahrzeugbus bestimmt und gemäß der Übersetzungsvorschrift IDF = S-IDF + MUX der Multiplexer MUX gebildet. Dieser wird in das zweite Datenbyte der auf dem Zugbus 18 gesendeten Botschaft geschrieben. Nachfolgend wird der Zugbusidentifier IDZ gemäß der Übersetzungsvorschrift IDZ = S-IDZ + Ordnungsnummer des sendenden Gateways ermittelt. Der Start-Identifier Zugbus S-IDZ ist hierbei gemäß der Übersetzungsvorschrift S-IDF = S-IDZ identisch mit dem Start-Identifier Fahrzeugbus S-IDF. Das Zielgateway 36 prüft anhand des Identifiers der Botschaft, ob es sich um eine globale Botschaft handelt oder nicht. Wird die Botschaft als nicht-globale Botschaft erkannt, wird anhand der Empfangscodierung im ersten Datenbyte geprüft, ob die Botschaft für den über das Zielgateway angeschlossenen Fahrzeugbus bestimmt ist. Ist dies der Fall, so erfolgt in dem Gateway 36 eine Rückadressierung. Hierbei wird aus dem Zugbusidentifier IDZ der Start-Identifier Zugbus S-IDZ bestimmt und entsprechend der Übersetzungsvorschrift IDZ = S-IDZ + Ordnungsnummer die Ordnungsnummer des sendenden Gateways 34 ermittelt und in das erste Datenbyte der Botschaft geschrieben. Da die vom sendenden Gateway 34 in das erste Datenbyte geschriebene Ordnungsnummer des Empfängergateways nicht mehr benötigt wird, kann das erste Datenbyte quasi überschrieben werden mit der Ordnungsnummer des sendenden Gateways. Anschließend wird gemäß der Übersetzungsvorschrift IDF = S-IDF + MUX der Multiplexer MUX aus dem zweiten Datenbyte der Zugbusbotschaft ermittelt, um den Fahrzeugbusidentifier IDF zu bilden. Die Information des Start-Identifier Fahrzeugbus S-IDF ist aufgrund der Übersetzungsvorschrift S-IDF = S-IDZ bekannt.

Anhand dieser beispielhaften Übertragung einer Botschaft wird deutlich, dass die Codierung der Botschaft erst im Gateway des sendenden Fahrzeugbusses erfolgt. Hierdurch können auf allen Fahrzeugbussen gleiche Identifier verwendet werden, da diese unabhängig von der durch die Initialisierung des Datenkommunikationssystems vergebenen Ordnungsnummern für die einzelnen Gateways ist. Es ist lediglich ein Datenbyte von der sendenden Systemkomponente innerhalb der Botschaft als Empfängercodierung zu vergeben. Insgesamt wird somit möglich, innerhalb einer Botschaft gleichzeitig eine Sende- und eine Zielinformation zu codieren, die einen direkten Nachrichtenaustausch zwischen Systemkomponenten zweier Fahrzeugbusse gestattet. Durch die in die Gateways integrierten Übersetzungsvorschriften zwischen den Zugbusbotschaften und den Fahrzeugbusbotschaften, die auf rein arithmetischer Umrechnung der Identifier basieren, wird es möglich, die Identifier der Botschaften ausschließlich auf den Fahrzeugbussen zu vergeben und die Zugbusidentifier automatisch zuzuweisen. Hierdurch wird insbesondere das Hinzufügen weiterer Systemkomponenten in das Kommunikationssystem möglich, da nur auf den durch das Hinzufügen beteiligten Fahrzeugbussen die Identifier für die Botschaften vergeben werden müssen, während in den Gateways aufgrund der abgelegten Übersetzungsvorschriften keine Veränderungen notwendig sind.

## Patentansprüche

1. Datenkommunikationssystem im Zug, mit einem Zugbus (18) zur Kommunikation zwischen Fahrzeugen (12, 14, 16) des Zuges (10) und jedem Fahrzeug zugeordneten internen Fahrzeugbussen (24, 26, 28, 30), die über jeweils ein Gateway (32 bzw. 34 bzw. 36 bzw. 38) an den Zugbus (18) angekoppelt sind, **dadurch gekennzeichnet, dass** eine Zugbotschaft gleichzeitig eine Sender- und Empfängercodierung umfasst und wenigstens ein Datenbyte jeder Botschaft gleichzeitig als Empfängercodierung auf einem sendenden Fahrzeug (12 oder 14 oder 16) und als Sendercodierung auf einem empfangenden Fahrzeugbus (24 bzw. 26 bzw. 28 bzw. 30) dient.

2. Datenkommunikationssystem nach Anspruch 1, **dadurch gekennzeichnet, dass** die Codierungen der Botschaften auf den Fahrzeugbussen (24, 26, 28, 30) vergeben werden und über die Gateways (32, 34, 36, 38) eine Umwandlung in eine Zugbusidentifizierung automatisch erfolgt.

3. Datenkommunikationssystem nach Anspruch 2, **dadurch gekennzeichnet, dass** die Umwandlung zwischen den Codierungen auf den Fahrzeugbussen (24, 26, 28, 30) und der Zugbusidentifizierung mittels in den Gateways (32, 34, 36, 38) abgelegten Algorithmen erfolgt.

4. Datenkommunikationssystem nach Anspruch 3, **dadurch gekennzeichnet, dass** die Algorithmen auf rein arihmetischer Umrechnung der Codierung der Botschaften basieren.

5. Datenkommunikationssystem nach einem der vorhergehenden Ansprüche, **dadurch gekennzeichnet, dass** die Botschaften von den sendenden Systemkomponenten in globale Botschaften, nicht-globale Botschaften und fahrzeugbusinterne Botschaften unterteilbar sind.

6. Datenkommunikationssystem nach einem der vorhergehenden Ansprüche, **dadurch gekennzeichnet, dass** die Datenkommunikation auf dem Zugbus (18) und in den Fahrzeugbussen (24, 26, 28, 30) mit einem Controller-Area-Network-Protokoll erfolgt.

## Claims

1. A data communication system in a train, with a train bus (18) for the communication between vehicles (12, 14, 16) of the train (10) and internal vehicle buses (24, 26, 28, 30) that are respectively assigned to each vehicle and coupled to the train bus (18) via a gateway (32 and 34 and 36 and 38, respectively), **characterized in that** a train message simultaneously comprises a sender and receiver encoding, and **in that** at least one data byte of each message simultaneously serves as a receiver encoding of a sending vehicle (12 or 14 or 16) and as a sender encoding of a receiving vehicle bus (24 and 26 and 28 and 30, respectively).

2. The data communication system according to Claim 1, **characterized in that** the encodings of the messages are carried out in the vehicle buses (24, 26, 28, 30), and **in that** a conversion into a train bus identifier is automatically carried out by the gateways (32, 34, 36, 38).

3. The data communication system according to Claim 2, **characterized in that** the conversion between the encodings of the vehicle buses (24, 26, 28, 30) and the train bus identifier is carried out with the aid of algorithms stored in the gateways (32, 34, 36, 38).

4. The data communication system according to Claim 3, **characterized in that** the algorithms are based on a purely arithmetical conversion of the message encodings.

5. The data communication system according to one of the preceding claims, **characterized in that** the messages of the sending system components can be categorized into global messages, non-global messages and internal vehicle bus messages.

6. The data communication system according to one of the preceding claims, **characterized in that** the data communication in the train bus (18) and in the vehicle buses (24, 26, 28, 30) is realized with a Controller-Area-Network protocol.

## Revendications

1. Système de communication de données dans le train, comportant un bus de train (18) pour la communication entre les véhicules (12, 14, 16) du train et des bus de véhicules internes (24, 26, 28, 30) associés à chaque véhicule, qui sont couplés respectivement par le biais d'une passerelle (32 ou 34 ou 36 ou 38) au bus de train (18), **caractérisé en ce qu'**un message de train comprend en même temps un codage d'émetteur et de destinataire et qu'au moins un octet de données de chaque message sert en même temps de codage de destinataire pour un véhicule émetteur (12 ou 14 ou 16) et de codage d'émission pour un bus de véhicule récepteur (24 ou 26 ou 28 ou 30).

2. Système de communication de données selon la revendication 1, **caractérisé en ce que** les codages des messages sont attribués aux bus de véhicules (24, 26, 28, 30) et qu'une conversion en une identification de bus de train a lieu automatiquement par le biais des passerelles (32, 34, 36, 38).

3. Système de communication de données selon la revendication 2, **caractérisé en ce que** la conversion entre les codages pour les bus de véhicules (24, 26, 28, 30) et l'identification du bus de train a lieu au moyen d'algorithmes intégrés dans les passerelles (32, 34, 36, 38).

4. Système de communication de données selon la revendication 3, **caractérisé en ce que** les algorithmes sont basés sur un recalcul purement arithmétique du codage des messages.

5. Système de communication de données selon l'une quelconque des revendications précédentes, **caractérisé en ce que** les messages des composants de système émetteurs peuvent être subdivisés en messages globaux, messages non globaux et messages internes aux bus de véhicules.

6. Système de communication de données selon l'une quelconque des revendications précédentes, **caractérisé en ce que** la communication de données au bus de train (18) et dans les bus de véhicules (24, 26, 28, 30) a lieu par protocole de réseau de zone de contrôle.
